Europäisches Patentamt

European Patent Office

Office européen des brevets

(19)

(11) Publication number: **0 030 645**
**B1**

(12) **EUROPEAN PATENT SPECIFICATION**

(45) Date of publication of patent specification: **18.04.84**

(51) Int. Cl.³: **G 11 B 5/48, G 11 B 5/56**

(21) Application number: **80107237.2**

(22) Date of filing: **20.11.80**

(54) **Magnetic head arm assembly.**

(30) Priority: **17.12.79 US 103966**

(43) Date of publication of application:
**24.06.81 Bulletin 81/25**

(45) Publication of the grant of the patent:
**18.04.84 Bulletin 84/16**

(84) Designated Contracting States:
**DE FR GB**

(56) References cited:
**FR - A - 2 374 719**
**US - A - 3 268 877**
**US - A - 3 940 794**
**US - A - 4 150 407**

(73) Proprietor: **International Business Machines Corporation**
**Old Orchard Road**
**Armonk, N.Y. 10504 (US)**

(72) Inventor: **Rinkleib, Helfried Otto**
**9846 E. Rosewood Street**
**Tucson Arizona 85710 (US)**

(74) Representative: **Petersen, Richard Courtenay**
**IBM United Kingdom Patent Operations Hursley Park**
**Winchester Hants. SO21 2JN (GB)**

Courier Press, Leamington Spa, England.

The invention relates to magnetic head arm assemblies and in particular to such assemblies as comprise a pivoted head arm and a magnetic transducer supported at one end of the arm.

In disk files which use accessing magnetic heads to record and read data from magnetic disks, rapid access to data tracks and with precise positioning over a selected track are highly desirable. With high data densities, it is necessary to maintain the head transducer very close, in pseudo-contact with a rotating disk, without significant variation in spacing between the transducer and disk surface. Also, if pivotable or arcuate head arm accessing is employed, as opposed to linear radial accessing, then the azimuth of the head transducer relative to the track must be properly maintained to avoid signal distortion or loss. The shape and weight of the head arm assembly and its relation to the actuator are important factors for ensuring rapid access with minimal vibration or resonance and with proper accuracy.

In US—A—4,150,407, there is disclosed a magnetic head arm assembly comprising a pivoted head arm and a magnetic transducer supported at one end of the arm, the arm being mounted on a rotatable shaft carried in a fixed bearing at one end and a floating bearing at the other end, with a compression spring between the bearings.

The invention seeks to provide a magnetic head arm assembly in which the arm support is lightweight and has low inertia, thereby affording rapid accessing to data, and which lends itself to easy adjustment.

Accordingly, the assembly is characterised in that the arm is hollow and frustroconical, both externally and internally, the thickness of the walls of the arm decreasing from a wide base portion at which the arm is mounted on the rotatable shaft, to an apex at which the transducer is mounted, and in that an adjusting nut is provided for varying the compression of the spring to adjust the vertical position of the shaft and arm.

The scope of the invention is defined by the appending claims; and how it can be carried into effect is hereinafter particularly described with reference to the accompanying drawings, in which:—

Figure 1 is an elevational sectional view of a magnetic head arm assembly, made in accordance with this invention; and

Figure 2 is a top view of the head arm assembly of Fig. 1.

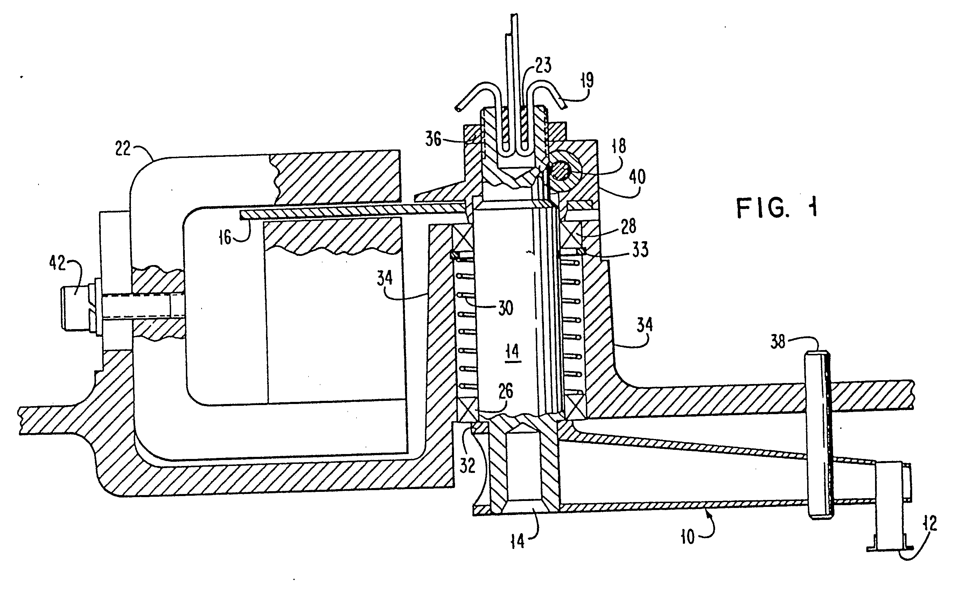

A magnetic head arm assembly includes a hollow frustroconical pivotal head arm 10 (Fig. 1), whose thin walls, made of aluminium for example, decrease in thickness from the wide base portion of the arm to the narrow apex portion. A magnetic transducer 12 is mounted at the apex portion of the arm 10 and the wide base portion is coupled to one end of a rotatable shaft 14. The cone axis is inclined slightly to the normal to the shaft axis so that the lower edge of the arm is normal to that axis.

Whilst this is convenient, because a disk, with which the transducer 12 may co-operate, is able to have a surface parallel to that lower edge, the cone axis may be normal to the shaft axis or at some other angle of inclination.

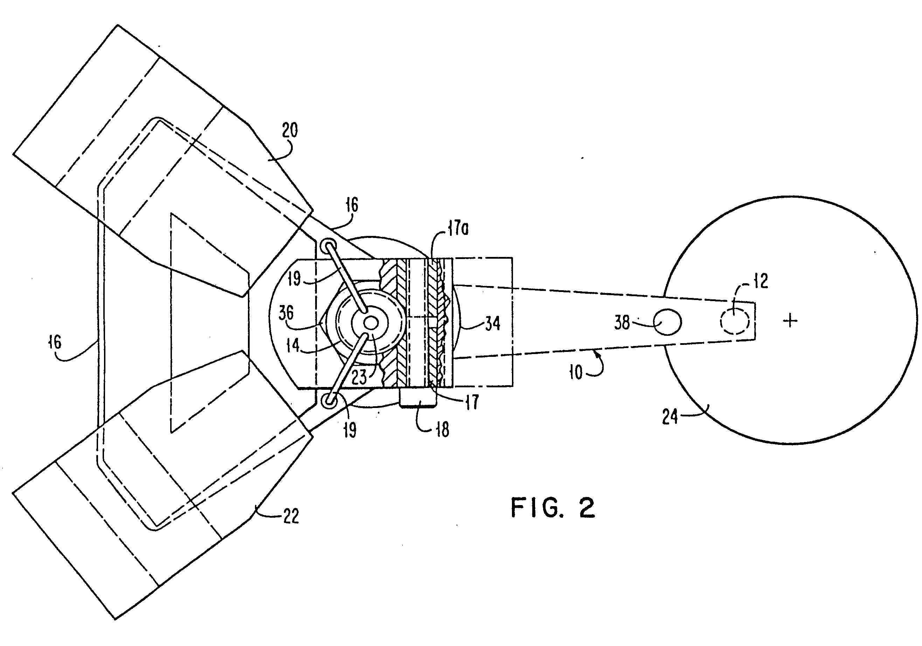

At the other end of the shaft 14, an electrical coil 16 on a collar 40 is fastened to the shaft by means of a clamping device 17 (Fig. 2) and 17a, which is held in position by a clamp screw 18. Cables 19 lead from the coil to a current supply which may be associated with a controller or data processor. A rubber grommet 23 centres the cables 19 relative to the shaft axis, thus minimizing drag which would occur with the motion of the coil 16. The electrical coil receives current of a given magnitude and direction from the current supply, which causes the coil to be energised within a magnetic field supplied by adjacent permanent magnets 20 and 22. In this way, the coil is caused to pivot between the two permanent magnets. The pivoting action of the coil rotates the shaft 14, thereby causing an arcuate movement of the arm 10, so that the transducer 12 is transported from data track to data track registered on the surface of a rotating magnetic disk 24.

A floating bearing 26 (Fig. 1) and a fixed bearing 28 are mounted to the shaft 14. The bearings are separated by a compression spring 30 that is seated around the shaft 14 and which acts to preload the bearings. The floating bearing 26 is seated on a shoulder 32 which retains the bearing within a housing 34. A clip ring 33 functions to maintain the fixed bearing in position. The housing 34 encloses the main portion of the shaft and the bearings and provides a reference frame for assembling the several components of the magnetic head arm assembly.

To preload the head arm assembly and make the adjustments necessary to orient the head arm and transducer so that they will be in proper relationship to the surface of a rotating magnetic disk, a first angular adjustment for azimuth is performed. Because the azimuth angle of the head will vary from track to track of the disk surface, the head arm 10 is moved to a predetermined centre location of the arcuate pivot path of the head arm 10. To achieve the correct alignment of the coil 16 with respect to the permanent magnets 20 and 22, a pin 38 is thrust through a bore of the housing 34 and through a bore formed in the head arm 10 to maintain the arm at the centre location while further adjustments are made.

The next adjustment is a vertical adjustment of the shaft 14, which is accomplished by rotating an adjusting nut 36 that causes the collar 40 to translate axially relative to the shaft so that the compression of the spring 30 is varied. By varying spring compression, the head arm is moved up or down until the desired height position is attained. At this point, the clamp screw 18 is tightened against the clamp 17 and 17a.

In addition, the permanent magnets 20 and 22 are positioned, by means of an adjusting screw 42, with relation to the coil 16 which has been aligned relative to the shaft 14. After all the adjustments have been finally made, the pin 38 is removed from the bores of the housing and the arm, so that the head arm may rotate freely in response to the pivoting action of the coil 16.

The magnet head arm assembly described affords a lightweight arm structure having low inertia for accessing data rapidly. The preloaded arm assembly ensures proper azimuth and a relatively stable flying height of the head and transducer with respect to a disk surface. Positioning of the electrical coil actuator and spaced permanent magnets, which constitute a voice coil motor, are adjusted for optimum alignment relative to the rotatable shaft to which the head arm assembly is mounted. The assembly is relatively low in cost, easy to maintain and allows simple adjustment of the several parts to realize precise alignment and orientation.

### Claims

1. A magnetic head arm assembly comprising a pivoted head arm (10) and a magnetic transducer (12) supported at one end of the arm, the arm being mounted on a rotatable shaft (14) carried in a fixed bearing (28) at one end and in a floating bearing (26) at the other end, with a compression spring (30) between the bearings characterised in that the arm (10) is hollow and frustroconical both externally and internally, the thickness of the walls of the arm decreasing from a wide base portion at which the arm is mounted on the rotatable shaft (14), to an apex at which the transducer is mounted, and in that an adjusting nut (36) is provided for varying the compression of the spring (30) to adjust the vertical position of the shaft and arm.

2. An assembly according to claim 1, including a clamp (17, 17a) and a clamp screw (18) for maintaining the adjustment of the shaft relative to the arm.

3. An assembly according to claim 1 or 2, including an electrical coil (16) mounted on the shaft, and first and second permanent magnets (20, 22) disposed in spaced and fixed relation to the shaft for providing a magnetic field to encompass the coil, and for moving the coil arcuately in response to electrical current applied to the coil.

4. An assembly according to claim 3, including an adjusting screw (42) for adjusting the position of the first and second permanent magnets relative to the shaft and coil.

### Revendications

1. Assemblage de bras pour tête magnétique comprenant un bras pivotant de gête (10) et un transducteur magnétique (12) supporté à une extrémité du bras, le bras étant monté sur un arbre tournant (14) porté dans un palier fixe (28) à une extrémité et dans un palier flottant (26) à l'autre extrémité, un ressort de compression (30) étant placé entre les paliers, caractérisé en ce que le bras (10) est creux et tronconique à la fois à l'extérieur et à l'intérieur, l'épaisseur des parois du bras diminuant depuis une partie large de base par laquelle le bras est monté sur l'arbre tournant (14) jusqu'à un sommet où le transducteur est monté, et en ce qu'il est prévu un écrou de réglage (36) pour faire varier la compression du ressot (30) afin d'ajuster la position verticale de l'arbre et du bras.

2. Assemblage selon la revendication 1, comprenant un dispositif de blocage (17, 17a) et une vis de blocage (18) pour maintenir le réglage de l'arbre par rapport au bras.

3. Assemblage selon la revendication 1 ou 2, comprenant un enroulement électrique (16) monté sur l'arbre et des premier et second aimants permanents (20, 22) disposés dans une relation espacée et fixe par rapport à l'arbre pour créer un champ magnétique entourant l'enroulement et pour produire un déplacement incurvé de l'enroulement en réponse à un courant électrique appliqué à l'enroulement.

4. Assemblage selon la revendication 3, comprenant une vis de réglage (42) pour adjuster la position des premier et second aimants permanents par rapport à l'arbre et à l'enroulement.

### Patentansprüche

1. Magnetkopf-Trägerarmanordnung mit einem schwenkbaren Kopfarm (10) und einem an einem Ende des Arms gehaltenen magnetischen Wandler (12), wobei der Arm auf einer drehbaren Welle (14) angebracht ist, die in einem feststehenden Lager (28) an einem Ende und in einem freibeweglichen Lager (26) am anderen Ende gehalten ist, wobei eine Druckfeder (30) zwischen den Lagern vorhanden ist, dadurch gekennzeichnet, daß der Arm (10) hohl und sowohl außen als auch innen kegelstumpfförmig ist, wobei die Dicke der Wände des Arms von einem breiten Basisabschnitt, an welchem der Arm an der drehbaren Welle (14) angebracht ist, zu einer Spitze, an welcher der Wandler angebracht ist, abnimmt, und daß eine Justiermutter (36) zur Veränderung der Pressung der Feder (30) für die Einstellung der Vertikallage von Welle und Arm vorgesehen ist.

2. Anordnung nach Anspruch 1, welche eine Klemme (17, 17a) und eine Klemmschraube (18) zur Aufrechterhaltung der Einstellung der Welle bezüglich des Arms enthält.

3. Anordnung nach Anspruch 1 oder 2, welche eine auf der Welle angebrachte elektrische Spule (16) und im Abstand sowie in fester Beziehung zur Welle angeordnete erste und zweite Permanentmagneten (20, 22) zur Schaffung eines die Spule umgebenden Magnetfelds und zur bogenförmigen Bewegung der Spule ansprechend auf der Spule zugeführten elektrischen Strom enthält.

4. Anordnung nach Anspruch 3, welche eine Justierschraube (42) zur Einstellung der Lage des ersten und des zweiten Permanentmagneten in Bezug auf Welle und Spule enthält.

FIG. 1

FIG. 2